# EUROPÄISCHE PATENTSCHRIFT

(11) **EP 2 799 745 B1**
(45) Veröffentlichungstag und Bekanntmachung des Hinweises auf die Patenterteilung: **01.11.2017**
(21) Anmeldenummer: 14166658.6
(22) Anmeldetag: 30.04.2014
(51) Int. Cl.: F16K 3/18, F16J 15/46

(54) **Dichtungsring und Schieberarmatur**
Sealing ring and gate valve
Bague d'étanchéité et robinet-vanne

(30) Priorität: 02.05.2013 DE 102013007451
(43) Veröffentlichungstag der Anmeldung: 05.11.2014
(73) Patentinhaber: Bü-Sch Armaturen GmbH, 90478 Nürnberg (DE)
(72) Erfinder: Joachim, Lang, 08304 Schönheide (DE)
(74) Vertreter: Stippl, Hubert

(56) Entgegenhaltungen:
- WO-A1-2009/125794
- DE-A1- 2 757 851
- DE-A1-102009 012 549
- DE-B4- 19 621 248
- US-A- 5 470 083
- US-A1- 2005 206 095

## Beschreibung

Die Beschreibung betrifft einen beidseitig wirkenden Dichtungsring gemäß dem Oberbegriff des Anspruchs 1 sowie eine Schieberarmatur gemäß dem Oberbegriff des Anspruchs 11.

### Technologischer Hintergrund

Eine Schieberarmatur dient dazu, eine Auslassöffnung an einer Wand zu verschließen und zu öffnen. Dazu wird die Schieberarmatur mittels eines Rahmens an der Wand um die Auslassöffnung befestigt. Der Rahmen selbst weist einen Durchlassdurchbruch auf, der der Auslassöffnung zugeordnet ist. Mittels einer Schieberplatte, die im Rahmen mit Hilfe einer Spindel auf- und abbewegbar ist, kann der Durchlassdurchbruch und somit auch die Auslassöffnung geöffnet und geschlossen werden. Entlang des Durchlassdurchbruchs ist ein Dichtungsring angeordnet, der bei Schließstellung der Schieberplatte elastisch zusammendrückbar ist. Mittels Keilen, die einerseits an der Schieberplatte und anderseits am Rahmen angeordnet sind, wird der Dichtungsring beim Schließvorgang an den die Auslassöffnung umgebenden Wandbereich gedrückt und liegt andererseits an der Schieberplatte an.

### Nächstliegender Stand der Technik

Aus DE 196 21 248 B4 ist ein beidseitig wirkender Dichtungsring für den Einsatz in einer Schieberarmatur bekannt. Der Dichtungsring umfasst einen metallenen Ringträger, der vollständig von Gummimasse ummantelt ist, die zur Wand und zur Schieberplatte hin je einen Dichtwulst bildet. Die wandseitige Gummimasse und der daraus gebildete Dichtwulst bestehen aus weicherem Material, während die schieberplattenseitige Gummimasse sowie der daraus bestehende Dichtwulst aus härterem Material gebildet sind. Die beiden Gummimasse-Teile gehen an ihrer Kontaktfläche ineinander über. Zudem weist der Dichtungsring einen radial vorspringenden Sims auf, der an der der Wand abgewendeten Seite von Haltestücken überfasst ist, die an einer Wandplatte befestigt sind. Der Sims ist zwischen den beiden Dichtwulsten angeordnet.

Die DE 27 57 851 A1 offenbart ein Dichtsystem mit einer aufblasbaren Dichtung zum wahlweisen Abdichten eines zwei mindestens zeitweilig unter verschiedenem Gasdruck stehenden Räume verbindenden Spaltes, wobei diese Dichtung in eine längs des Spaltes verlaufende nutartige Ausnehmung eingelegt ist. Der dem Spalt abgewandte Teil der Dichtung ist als aufblasbarer Schlauch ausgebildet und der dem Spalt zugewandte Teil der Dichtung bildet einen in der nutartigen Ausnehmung geführten, in Richtung zum Spalt bewegbaren Schieber. In das Innere des aufblasbaren Schlauches ist eine Leiste eingelegt. Beim Aufblasen des Schlauches schiebt sich der Schieber riegelartig in den Spalt und wird unter dem Druck des Schlauches gegen die Dichtfläche gepresst.

Die aus DE 10 2009 012 549 A1 bekannte aufblasbare Dichtung wird durch magnetische Kräfte auf einer Auflage oder in einer Rinne gehalten. Die aufblasbare Dichtung läuft dabei über den gesamten Umfang der Dichtung.

Aus US 5,470,083 A ist eine in einer Rückschlagklappe angeordnete Dichtungsanordnung bekannt. Die Dichtungsanordnung umfasst eine Metalldichtung mit einem U-förmigen Querschnitt, wobei in einer Nut der Metalldichtung eine Elastomerschicht, welche wiederum eine Elastomerröhre umgibt, vorgesehen ist. Die Elastomerröhre ist mit einem Mittel zur Druckbeaufschlagung verbunden, um die Elastomerröhre mit einem geeigneten Medium unter Druck zu setzen. Auf der Elastomerschicht befindet sich eine Dichtschicht, die zum Beispiel aus einem härteren Elastomer besteht.

Die WO 2009/125794 A1 offenbart einen Dichtungsmechanismus umfassend ein Dichtmittel mit einem harten Polsterteil und einem flexiblen elastischen Teil. Mittels des harten Polsterteils, der aus einer ringförmigen Rille herausragt, wird eine schnelle Abdichtung der Öffnung ermöglicht.

Die US 2005/206095 A1 offenbart eine Dichtungsanordnung mit einer äußeren elastischen Kontaktoberfläche und mindestens einem inneren harten Kern. Zudem ist ein innenliegender Fluiddurchgang oder Fluidkanal vorgesehen, der mit Fluid befüllbar ist, um eine Expansion der gesamten Dichtungsanordnung zu bewirken.

### Aufgabe der vorliegenden Erfindung

Die Aufgabe der vorliegenden Erfindung besteht darin, einen neuartigen Dichtungsring der gattungsgemäßen Art sowie eine damit ausgestattete Schieberarmatur zur Verfügung zu stellen, sodass bei einfacher Konstruktion der Schieberarmatur eine erhöhte Dichtwirkung auch bei vergleichsweise größeren Unebenheiten im Wandbereich ermöglicht wird.

### Lösung der Aufgabe

Die vorstehende Aufgabe wird bei dem Dichtungsring gemäß dem Oberbegriff des Anspruchs 1 dadurch gelöst, dass der erste Dichtwulst ein mit einem Fluid zumindest teilweise gefülltes Reservoir aufweist, welches sich entlang des Dichtwulstes erstreckt, der Dichtungskörper mittels eines entlang des Dichtungskörpers verlaufenden Teilungsbereichs um den Ringträger angeordnet ist und der Teilungsbereich des Dichtungskörpers im Haltebereich angeordnet ist. Der Dichtungskörper kann mittels des Teilungsbereichs und aufgrund seiner Elastizität in einfacher Weise um den Ringträger angeordnet werden. Der am Dichtungskörper radial vorspringende Haltebereich ist an einem Rahmen der Schieberarmatur unmittelbar oder mittelbar (mittels Halteelementen) angeordnet. Der Haltebereich dient dazu, die Dichtung im Rahmen zu fixieren bzw. zu halten. Der zur Wand weisende das Reservoir bzw. das Fluid beinhaltende erste Dichtwulst zeichnet sich dadurch aus, dass er sehr flexibel ist und sich auch größeren Wandunebenheiten wie z. B. einer leicht schrägen Wand gut anpassen kann. Dabei wird der Bereich der Dichtwulst, der der Wand näher ist, mehr zusammengedrückt, wodurch das Fluid in den anderen Bereich des Reservoirs verdrängt wird. In diesem anderen Bereich des Reservoirs, in dem der Dichtungsring etwas weiter von der Wand beanstandet ist, ist der Dichtwulst dadurch etwas dicker und kann auch dort eine entsprechend hohe Dichtwirkung erzielen. Durch die Anpassungsfähigkeit des Fluids bzw. der im Vergleich zum gesamten Dichtwulst relativ dünnwandigen Außenseite des Reservoirs wird diese hohe Flexibilität bzw. Anpassungsfähigkeit ermöglicht. Gleichzeitig sorgt das Fluid dafür, dass es einer Komprimierung aufgrund der Anpressung der Dichtung ausreichend Widerstand entgegensetzt. Der insbesondere biegungssteife Ringträger sorgt für Formstabilität des Dichtungsrings und dient der gesamten Stabilisierung des Dichtungsrings.

Dieser Ringträger sowie der gesamte Dichtungsring können auch einen eckigen Dichtverlauf aufweisen. Obwohl dann keine Ringform mehr vorliegt, wird stets von einem Dichtungsring sowie einem Ringträger gesprochen. Der Dichtungsring sowie der Ringträger umfassen demnach auch eckige Dichtverläufe.

Zweckmäßigerweise kann es sich bei dem Ringträger um einen Stahlträger handeln, der die erforderliche Stabilität und Festigkeit aufweist. Indem dieser Ringträger von dem Dichtungskörper ummantelt ist, ist er vor Korrosion geschützt.

Vorteilhafterweise handelt es sich bei dem Fluid um ein hydraulisches Medium. Ein hydraulisches Medium hat den Vorteil, dass Temperaturschwankungen einen geringen Einfluss auf die Viskosität haben. Die gute Dichtwirkung des Dichtungsrings ist folglich relativ temperaturunabhängig. Zweckmäßigerweise wird ein alterungsbeständiges hydraulisches Medium verwendet, welches mit dem umgebenden Dichtungsmaterial verträglich ist.

In vorteilhafter Weise besteht der Dichtungskörper aus einem Elastomer, insbesondere einem thermoplastischen Elastomer. Dadurch sind der Dichtungskörper bzw. die Dichtwülste bei der Druckbelastung elastisch zusammendrückbar und finden danach wieder in ihre ursprüngliche Gestalt zurück. Besteht der Dichtungskörper aus einem thermoplastischen Elastomer, dann hat er neben den elastomeren oder gummielastischen Eigenschaften noch den Vorteil, dass er sich ähnlich den Thermoplasten verarbeiten lässt. Dementsprechend kann der Dichtungskörper mittels Extrusion bzw. Strangpressen zusammen mit dem bereits vorgesehenen Reservoir in kostengünstiger Weise in beliebiger Länge hergestellt werden.

Zweckmäßigerweise kann der zur Schieberplatte weisende zweite Dichtwulst aus Vollmaterial bestehen. Dies dient einerseits der Stabilisierung, andererseits kann das Vollmaterial größere Kräfte aufnehmen.

Nach Ablängen auf die benötigte Länge kann das Reservoir des stranggepressten Dichtungskörpers über eine offene Stirnseite mit dem Fluid befüllt werden. Anschließend können die offenen Enden miteinander verbunden, insbesondere verschweißt werden und schließlich auf den Ringträger angelegt bzw. aufgezogen werden.

Mit Vorteil kann die Querschnittsform des Reservoirs der Querschnittsform des Dichtwulstes, in dem das Reservoir vorgesehen ist, im Wesentlichen angepasst sein. Dadurch werden die dort auftretenden Kräfte gleichmäßig auf das Reservoir bzw. das Fluid übertragen. Das Reservoir ist zudem ober- und unterseitig mit in etwa der gleichen Materialstärke des Dichtungskörpers umgeben.

Demnach kann der Querschnitt des Reservoirs im Wesentlichen halbkreisförmig sein und sich dadurch der Querschnittsform des Dichtwulstes anpassen.

Wie oben bereits erwähnt, kann der Dichtungskörper ein Strangpressprofil sein und je nach Gegebenheiten oder Anforderungen entsprechend dimensioniert sein.

Dabei kann der Dichtungskörper eine Ausnehmung zur Aufnahme des Ringträgers aufweisen, wobei die Querschnittsform der Ausnehmung und der Querschnittsform des Ringträgers im Wesentlichen angepasst ist. Der Dichtungskörper ist dadurch flächenschlüssig an den Ringträger angelegt, sodass die vom Dichtungskörper bzw. den Dichtwülsten aufgenommenen Kräfte direkt an den Ringträger übertragen werden können.

Bei eckigem Verlauf des Dichtungsrings können die Enden des Strangpressprofils auf Gehrung geschnitten und miteinander verbunden, insbesondere verschweißt sein. Der Dichtungsring lässt sich also mit einem Fluid gefüllten Reservoir auch bei eckigem Dichtungsverlauf zweckmäßig verwenden.

Der Teilungsbereich kann an einer Seite einen Vorsprung aufweisen, der in eine korrespondierende Ausnehmung an der gegenüberliegenden Seite eingreift. Der Teilungsbereich ist demnach wie eine Spundung bei Holzverbindungen ausgebildet. Dadurch ist dieser Bereich nach Anlegen um den Ringträger wieder sicher verschlossen.

Der oben beschriebene Teilungsbereich des Dichtungskörpers kann im Haltebereich angeordnet sein, wo die durch die Anpressung der Schieberplatte an die Dichtung erzeugten Kräfte so auftreffen, dass der geteilte Bereich aneinander gepresst wird.

Die erfindungsgemäße Schieberarmatur beinhaltet einen Dichtungsring gemäß mindestens einem der oben genannten Merkmale.

Vorteilhafte Ausführungsvarianten der Erfindung sind in den Zeichnungsfiguren dargestellt. Diese zeigen:
- Fig. 1: eine perspektivische Darstellung einer Schieberarmatur;
- Fig. 2: einen Längsschnitt einer Schieberarmatur mit einem beidseitig wirkenden Dichtungsring an einer ebenen Wand angeordnet;
- Fig. 3: einen Längsschnitt einer Schieberarmatur mit einem beidseitig wirkenden Dichtungsring an einer unebenen Wand angeordnet;
- Fig. 4: einen Querschnitt des beidseitig wirkenden Dichtungsrings;
- Fig. 5: eine Prinzipdarstellung des an einer ebenen Wand anliegenden Dichtungsrings im Querschnitt sowie
- Fig. 6: eine Prinzipdarstellung des an einer unebenen Wand anliegenden Dichtungsrings in Querschnitt.

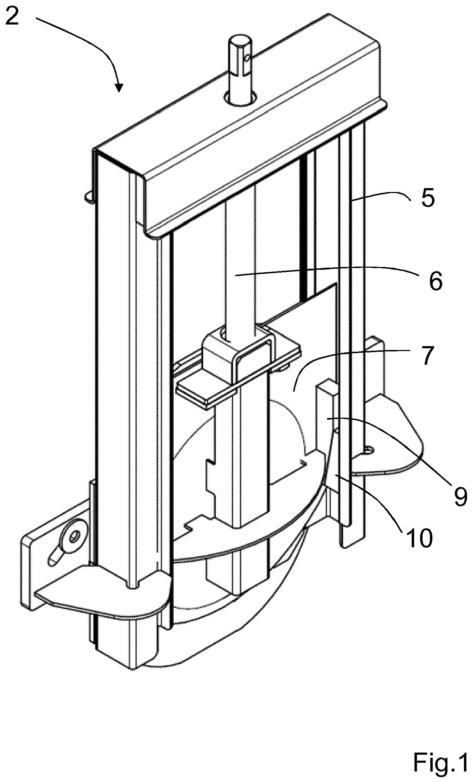

Der beidseitig wirkende Dichtungsring ist mit Bezugsziffer 1 versehen und für den Einsatz in einer Schieberaramatur 2 bestimmt, von der in Fig. 1 die wesentlichen Elemente dargestellt sind. Sie ist im Bereich einer eine Auslassöffnung 3 aufweisenden Wand 4 befestigt, um ein Verschließen sowie ein Öffnen der Auslassöffnung 3 zu ermöglichen. Die Schieberarmatur 2 ist über einen Rahmen 5 an der Wand 4 befestigt und umfasst eine Spindel 6 sowie eine mittels der Spindel 6 vertikal bewegbare Schieberplatte 7, die dazu dient, die Auslassöffnung 3 bei Bedarf zu verschließen und zu öffnen (siehe Fig. 1, 2, 3).

Um eine Abdichtung zwischen der Schieberplatte 7 und der Wand 4 zu gewährleisten, umfasst die Schieberarmatur den Dichtungsring 1, welcher in einem Durchlassdurchbruch 8 des an der Wand 4 befestigen Rahmens 5 angeordnet ist.

Sofern die Auslassöffnung 3 verschlossen werden soll, wird mittels der Spindel 6 die Schieberplatte 7 nach unten in den Bereich der Auslassöffnung 3 bewegt und, kurz bevor die Schieberplatte 7 ihre endgültige Schließposition erreicht hat, über an der Schieberplatte 7 sowie am Rahmen 5 angeordneten Keilen 9, 10 an den Dichtungsring 1 angedrückt. Der Dichtungsring 1 wird mit Druck beaufschlagt, sodass ein dichter Verschluss zwischen Schieberplatte 7 und Wand 4 erzielt wird.

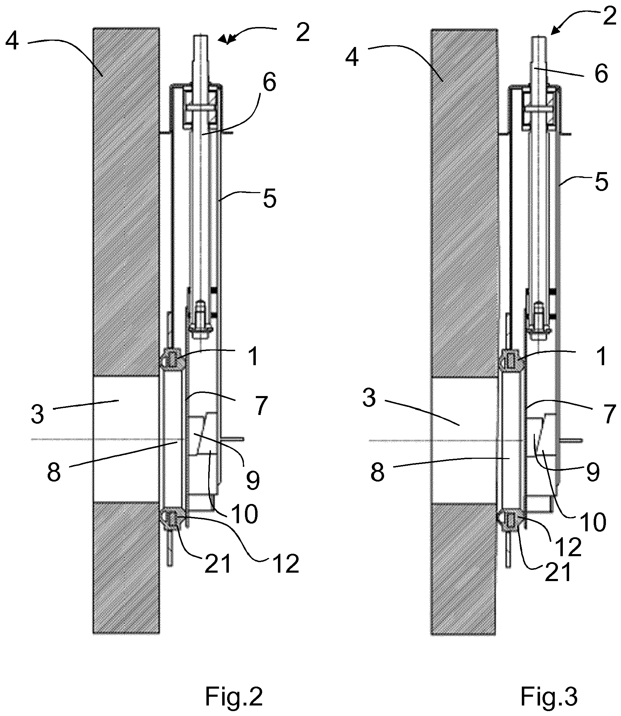

Die Figuren 2 und 3 zeigen die Schieberarmatur 2 in dem Zustand, in dem die Auslassöffnung 3 verschlossen ist. In Figur 2 ist die Wand 4 um die Auslassöffnung eben ausgebildet, in Figur 3 uneben.

Der Dichtungsring 1 umfasst einen biegungssteifen Ringträger 11, der einen umlaufenden Dichtungskörper 12 aufweist. Der Dichtungskörper 12 umfasst einen zur Wand 4 weisenden ersten Dichtwulst 13 sowie einen zu der Schieberplatte 7 weisenden zweiten Dichtwulst 14 (siehe Figuren 2 bis 6).

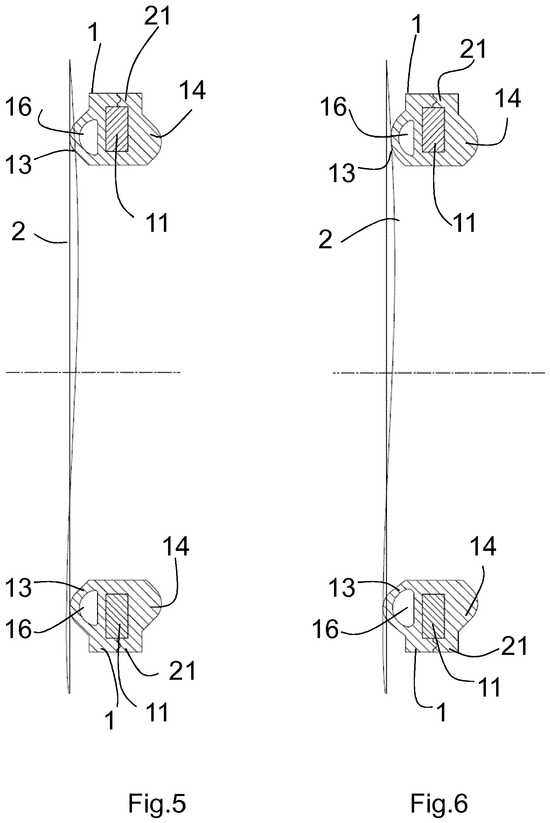

Der zur Wand weisende erste Dichtwulst 13 des Dichtungsrings 1 weist ein mit einem Fluid zumindest teilweise gefülltes Reservoir 16 auf, welches sich entlang des Dichtwulstes 13 erstreckt. Der erste Dichtwulst 13 ist mittels des Fluid gefüllten Reservoirs äußerst flexibel und gleichzeitig druckfest ausgebildet, sodass der Dichtungsring 1 auch an unebenen Wandflächen ausreichend abdichtet. Die Figuren 3 und 6 verdeutlichen den Dichtungseffekt des Dichtungsrings 1 bei einer unebenen Wand 4. Dort ist erkennbar, dass der jeweils oberseitige Bereich des Dichtungsrings 1 bzw. der erste Dichtwulst 13 durch die dort hervorstehende Wand 4 stärker an diese angepresst wird als der untere Bereich des Dichtungsrings 1.

Bei dem Fluid handelt es sich um ein hydraulisches Medium 15, dessen Viskosität bei den einschlägigen Temperaturverhältnissen relativ temperaturunabhängig ist.

Der Dichtungskörper 12 besteht aus einem thermoplastischen Elastomer. Er weist eine hohe Elastizität auf und ist gleichzeitig aufgrund seiner Plastizität im Strangpressverfahren herstellbar.

Der zur Schieberplatte 7 weisende zweite Dichtwulst 14 besteht aus Vollmaterial und weist eine hohe Druckfestigkeit auf. Der zweite Dichtwulst 14 dient neben der Aufnahme von hohen Kräften der Stabilisierung.

Die beiden Enden des als Strangpressprofil hergestellten Dichtungsrings 1 werden nach Befüllung des Reservoirs 16 mit Fluid miteinander verbunden, vorzugsweise verschweißt, sodass das Fluid luftdicht eingeschlossen ist.

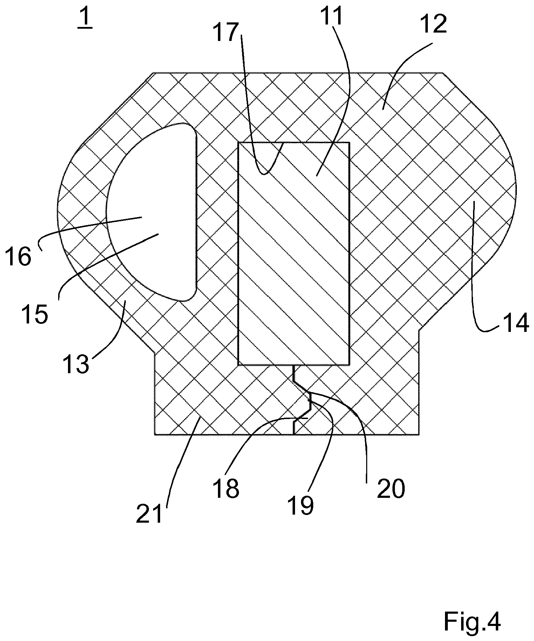

Wie insbesondere aus den Figuren 4, 5 und 6 hervorgeht, ist die Querschnittsform des Reservoirs 16 der Querschnittsform des ersten Dichtwulstes 13 im Wesentlichen angepasst. Die Querschnittsform des Reservoirs 16 ist dabei im Wesentlichen halb- oder teilkreisförmig ausgebildet. Es kann sich in dieser Ausgestaltung einer unebenen Wand gut anpassen, sodass eine optimale Dichtwirkung erzeugt wird (siehe Figuren 3 und 6).

Der Dichtungskörper 12 weist eine Ausnehmung 17 zur Aufnahme des Ringträgers 11 auf, wobei die Querschnittsform der Ausnehmung 17 der Querschnittsform des Ringträgers 11 angepasst ist.

Der Dichtungskörper 12 liegt auf diese Weise flächig in stabiler Weise am Ringträger 11 an. Die auf den Dichtungskörper 12 einwirkenden Kräfte werden direkt an den Ringträger 11 aus Stahl weitergeleitet.

Wie ferner aus den Figuren 4 bis 6 hervorgeht, ist der Dichtungskörper 12 mittels einer entlang des Dichtungskörpers 12 verlaufenden Teilungsbereichs 18 um den Ringträger 11 angeordnet. Aufgrund seiner Elastizität kann der Dichtungskörper 12 durch Aufspreizen des offenen Bereichs 18 um den Ringträger 11 angelegt werden. Anschließend schließt sich der offene Bereich 18 aufgrund des elastischen Materials wieder von selbst.

Der Teilungsbereich 18 weist an einer Seite einen Vorsprung 19 auf, der in eine korrespondierende Ausnehmung 20 an der gegenüberliegenden Seite eingreift. Dadurch ist dieser Bereich gegen ein Verrutschen gesichert. Der Dichtungskörper 12 weist außerdem einen radial vorspringenden Haltebereich 21 auf, der am Rahmen 5 der Schieberarmatur 2 angeordnet ist (siehe Fig. 2 und 3). Die Befestigung des Haltebereichs 21 erfolgt über am Rahmen 5 angeordnete Bügel, die jedoch in den Figuren nicht dargestellt sind. In dem Haltebereich 21 ist der oben beschriebene Teilungsbereich 18 des Dichtungskörpers 12 angeordnet.

### BEZUGSZEICHENLISTE

- 1): Dichtungsring
- 2): Schieberarmatur
- 3): Auslassöffnung
- 4): Wand
- 5): Rahmen
- 6): Spindel
- 7): Schieberplatte
- 8): Durchlassdurchbruch
- 9): Keil
- 10): Keil
- 11): Ringträger
- 12): Sichtungskörper
- 13): Erster Dichtwulst
- 14): Zweiter Dichtwulst
- 15): Hydraulisches Medium
- 16): Reservoir
- 17): Ausnehmung
- 18): Teilungsbereich
- 19): Vorsprung
- 20): Ausnehmung
- 21): Haltebereich

## Patentansprüche

1. Beidseitig wirkender Dichtungsring für den Einsatz in einer Schieberarmatur (2), die im Bereich einer eine Auslassöffnung (3) aufweisenden Wand (4) befestigt ist, um einen Verschluss der Auslassöffnung (3) zu ermöglichen, wobei
- der Dichtungsring (1) einen Ringträger (11) mit umlaufendem Dichtungskörper (12) aufweist, der einen ersten Dichtwulst (13) und einen gegenüberliegenden zweiten Dichtwulst (14) umfasst,
- der Dichtungskörper (12) einen radial vorspringenden Haltebereich (21) aufweist und
- der Haltebereich (21) zwischen erstem Dichtwulst (13) und zweitem Dichtwulst (14) angeordnet ist,
**dadurch gekennzeichnet, dass**
- der erste Dichtwulst (13) ein mit einem Fluid zumindest teilweise befülltes Reservoir (16) aufweist, welches sich entlang des Dichtwulstes (13) erstreckt,
- der Dichtungskörper (12) mittels eines entlang des Dichtungskörpers (12) verlaufenden Teilungsbereichs (18) um den Ringträger (11) angeordnet ist und
- der Teilungsbereich (18) des Dichtungskörpers (12) im Haltebereich (21) angeordnet ist.

2. Beidseitig wirkender Dichtungsring nach Anspruch 1,
**dadurch gekennzeichnet, dass** es sich bei dem Fluid um ein hydraulisches Medium (15) handelt.

3. Beidseitig wirkender Dichtungsring nach mindestens einem der Ansprüche 1 oder 2,
**dadurch gekennzeichnet, dass**
der Dichtungskörper (12) aus einem Elastomer, insbesondere einem thermoplastischen Elastomer, besteht.

4. Beidseitig wirkender Dichtungsring nach mindestens einem der vorhergehenden Ansprüche,
**dadurch gekennzeichnet, dass**
der Dichtungskörper (12) ein Strangpressprofil ist.

5. Beidseitig wirkender Dichtungsring nach mindestens einem der vorhergehenden Ansprüche,
**dadurch gekennzeichnet, dass**
der zur Schieberplatte (7) weisende Dichtwulst (14) aus Vollmaterial besteht.

6. Beidseitig wirkender Dichtungsring nach Anspruch 4,
**dadurch gekennzeichnet, dass**
die beiden stirnseitigen Enden des Strangpressprofils miteinander verschweißt sind.

7. Beidseitig wirkender Dichtungsring nach mindestens einem der vorhergehenden Ansprüche,
**dadurch gekennzeichnet, dass**
die Querschnittsform des Reservoirs (16) der Querschnittsform des Dichtwulstes (13) im Wesentlichen angepasst ist.

8. Beidseitig wirkender Dichtungsring nach mindestens einem der vorhergehenden Ansprüche,
**dadurch gekennzeichnet, dass**
der Dichtungskörper (1) eine Ausnehmung (17) zur Aufnahme des Ringträgers (11) aufweist, wobei die Querschnittsform der Ausnehmung (17) der Querschnittsform des Ringträgers (11) im Wesentlichen angepasst ist.

9. Beidseitig wirkender Dichtungsring nach mindestens einem der Ansprüche 4 bis 8,
**dadurch gekennzeichnet, dass**
bei eckigem Verlauf des Dichtungsrings (1) die Enden des Strangpressprofils auf Gehrung geschnitten und miteinander verbunden sind.

10. Beidseitig wirkender Dichtungsring nach Anspruch 1,
**dadurch gekennzeichnet, dass**
der Teilungsbereich (18) an einer Seite einen Vorsprung (19) aufweist, der in eine korrespondierende Ausnehmung (20) an der gegenüberliegenden Seite eingreift.

11. Schieberarmatur, die im Bereich einer eine Auslassöffnung (3) aufweisenden Wand (4) befestigt ist, um einen Verschluss der Auslassöffnung (3) zu ermöglichen, umfassend
- einen Rahmen (5) zur Anbringung an der Wand (4), der einen der Auslassöffnung (3) zugeordneten Durchlassdurchbruch (8) aufweist,
- eine Schieberplatte (7), die im Rahmen (5) zwischen einer den Durchlassdurchbruch (8) überdeckenden Schließstellung und einer Offenstellung hin- und herbewegbar ist, sowie
- einen sich entlang des Durchlassdurchbruches (8) erstreckenden Dichtungsring (1), der bei Schließstellung der Schieberplatte elastisch zusammendrückbar ist, wobei der Dichtungsring (1) einerseits an der Wand (4) und andererseits an der Schieberplatte (7) anliegt,
**dadurch gekennzeichnet, dass**
die Schieberarmatur (2) einen Dichtungsring (1) gemäß mindestens einem der vorhergehenden Ansprüche aufweist.

## Claims

1. Sealing ring with a double-sided action for use in a gate valve (2) which is fastened in the region of a wall (4) having an outlet opening (3) in order to allow closure of the outlet opening (3), wherein
- the sealing ring (1) has a ring carrier (11) with a circumferential sealing body (12) which comprises a first sealing bead (13) and an opposite second sealing bead (14),
- the sealing body (12) has a radially projecting retaining region (21), and
- the retaining region (21) is arranged between the first sealing bead (13) and second sealing bead (14),
**characterized in that**
- the first sealing bead (13) has a reservoir (16) which is at least partially filled with a fluid and which extends along the sealing bead (13),
- the sealing body (12) is arranged around the ring carrier (11) by means of a parting region (18) which extends along the sealing body (12), and
- the parting region (18) of the sealing body (12) is arranged in the retaining region (21).

2. Sealing ring with a double-sided action according to Claim 1,
**characterized in that**
the fluid is a hydraulic medium (15).

3. Sealing ring with a double-sided action according to at least one of Claims 1 and 2,
**characterized in that**
the sealing body (12) consists of an elastomer, in particular a thermoplastic elastomer.

4. Sealing ring with a double-sided action according to at least one of the preceding claims,
**characterized in that**
the sealing body (12) is an extruded profile.

5. Sealing ring with a double-sided action according to at least one of the preceding claims,
**characterized in that**
the sealing bead (14) directed towards the slider plate (7) consists of solid material.

6. Sealing ring with a double-sided action according to Claim 4,
**characterized in that**
the two terminal ends of the extruded profile are welded to one another.

7. Sealing ring with a double-sided action according to at least one of the preceding claims,
**characterized in that**
the cross-sectional shape of the reservoir (16) is substantially adapted to the cross-sectional shape of the sealing bead (13).

8. Sealing ring with a double-sided action according to at least one of the preceding claims,
**characterized in that**
the sealing body (1) has a clearance (17) for receiving the ring carrier (11), wherein the cross-sectional shape of the clearance (17) is substantially adapted to the cross-sectional shape of the ring carrier (11).

9. Sealing ring with a double-sided action according to at least one of Claims 4 to 8,
**characterized in that,**
with the sealing ring (1) having an angular shape, the ends of the extruded profile are mitre-cut and connected to one another.

10. Sealing ring with a double-sided action according to Claim 1,
**characterized in that**
the parting region (18) has on one side a projection (19) which engages in a corresponding recess (20) on the opposite side.

11. Gate valve which is fastened in the region of a wall (4) having an outlet opening (3) in order to allow closure of the outlet opening (3), comprising
- a frame (5) for mounting on the wall (4) and having a through-passage (8) assigned to the outlet opening (3),
- a slider plate (7) which can be moved to and fro in the frame (5) between a closing position in which it covers the through-passage (8) and an open position, and
- a sealing ring (1) which extends along the through-passage (8) and which can be elastically compressed in the closing position of the slider plate, wherein the sealing ring (1) bears against the wall (4) on the one hand and against the slider plate (7) on the other hand,
**characterized in that**
the gate valve (2) has a sealing ring (1) according to at least one of the preceding claims.

## Revendications

1. Bague d'étanchéité à action bilatérale destinée à être utilisée pour un élément de robinetterie à coulisse (2), lequel est fixé dans la zone d'une paroi (4) qui possède une ouverture de sortie (3), afin de permettre une fermeture de l'ouverture de sortie (3),
- la bague d'étanchéité (1) possédant un porte-bague (11) muni d'un corps d'étanchéité (12) périphérique, lequel comporte un premier boudin d'étanchéité (13) et un deuxième boudin d'étanchéité (14) opposé,
- le corps d'étanchéité (12) possédant une zone de maintien (21) saillante dans le sens radial et
- la zone de maintien (21) étant disposée entre le premier boudin d'étanchéité (13) et le deuxième boudin d'étanchéité (14),
**caractérisée en ce que**
- le premier boudin d'étanchéité (13) possède un réservoir (16) au moins partiellement rempli avec un fluide, lequel s'étend le long du boudin d'étanchéité (13),
- le corps d'étanchéité (12) est disposé autour du porte-bague (11) au moyen d'une zone de division (18) qui s'étend le long du corps d'étanchéité (12) et
- la zone de division (18) du corps d'étanchéité (12) est disposée dans la zone de maintien (21).

2. Bague d'étanchéité à action bilatérale selon la revendication 1, **caractérisée en ce que** le fluide est un fluide hydraulique (15).

3. Bague d'étanchéité à action bilatérale selon au moins l'une des revendications 1 ou 2, **caractérisée en ce que** le corps d'étanchéité (12) se compose d'un élastomère, notamment d'un élastomère thermoplastique.

4. Bague d'étanchéité à action bilatérale selon au moins l'une des revendications précédentes, **caractérisée en ce que** le corps d'étanchéité (12) est un profilé extrudé.

5. Bague d'étanchéité à action bilatérale selon au moins l'une des revendications précédentes, **caractérisée en ce que** le boudin d'étanchéité (14) dirigé vers la plaque coulissante (7) se compose de matière pleine.

6. Bague d'étanchéité à action bilatérale selon la revendication 4, **caractérisée en ce que** les deux extrémités côté frontal du profilé extrudé sont soudées l'une à l'autre.

7. Bague d'étanchéité à action bilatérale selon au moins l'une des revendications précédentes, **caractérisée en ce que** la forme de la section transversale du réservoir (16) est sensiblement adaptée à la forme de la section transversale du boudin d'étanchéité (13).

8. Bague d'étanchéité à action bilatérale selon au moins l'une des revendications précédentes, **caractérisée en ce que** le corps d'étanchéité (1) possède une cavité (17) destinée à accueillir le porte-bague (11), la forme de la section transversale de la cavité (17) étant sensiblement adaptée à la forme de la section transversale du porte-bague (11).

9. Bague d'étanchéité à action bilatérale selon au moins l'une des revendications 4 à 8, **caractérisée en ce que** dans le cas d'un parcours anguleux de la bague d'étanchéité (1), les extrémités du profilé extrudé sont coupées en onglet et reliées entre elles.

10. Bague d'étanchéité à action bilatérale selon la revendication 1, **caractérisée en ce que** la zone de division (18) possède d'un côté une partie saillante (19) qui vient en prise dans une cavité (20) correspondante sur le côté opposé.

11. Élément de robinetterie à coulisse qui est fixé dans la zone d'une paroi (4) qui possède une ouverture de sortie (3), afin de permettre une fermeture de l'ouverture de sortie (3), comprenant
- un cadre (5) servant au montage sur la paroi (4), laquelle possède une percée de passage (8) associée à l'ouverture de sortie (3),
- une plaque coulissante (7) qui peut être déplacée dans un sens et dans l'autre dans le cadre (5) entre une position fermée, qui recouvre la percée de passage (8), et une position ouverte, et
- une bague d'étanchéité (1) qui s'étend le long de la percée de passage (8) et qui, en position fermée de la plaque coulissante, peut être comprimée élastiquement, la bague d'étanchéité (1) reposant d'un côté contre la paroi (4) et de l'autre côté contre la plaque coulissante (7),
**caractérisé en ce que** l'élément de robinetterie à coulisse (2) possède une bague d'étanchéité (1) selon au moins l'une des revendications précédentes.
